# EUROPEAN PATENT APPLICATION

(11) **EP 3 125 101 A1**
(43) Date of publication of application: **01.02.2017**
(21) Application number: 16182207.7
(22) Date of filing: 01.08.2016
(51) Int. Cl.: G06F 3/0488

(54) **SCREEN CONTROLLING METHOD AND ELECTRONIC DEVICE FOR SUPPORTING THE SAME**

(30) Priority: 31.07.2015 KR 20150108626
(71) Applicant: Samsung Electronics Co., Ltd., Suwon-si, Gyeonggi-do 16677 (KR)
(72) Inventor: Lee, Bo Na, 06246 Seoul (KR); Na, Seok Hee, 22003 Incheon (KR); Lee, Chae Kyung, 03321 Seoul (KR)
(74) Representative: Nederlandsch Octrooibureau

(57) **Abstract**

An electronic device is provided. The electronic device includes a touch screen display configured to receive a user input, and a processor configured to analyze a first user input received in a state that a screen output of the display is terminated, activate a partial screen area of the display based on the analyzed result, and output an execution screen of a designated application to the partial screen area based on the analyzed result.

## Description

### PRIORITY

This application claims priority to Korean Patent Application No. 10-2015-0108626, filed July 31, 2015, the content of which is incorporated herein by reference.

### BACKGROUND OF THE INVENTION

### 1. Field of the Invention

The present disclosure relates to a method of controlling a screen.

### 2. Background of the Invention

If an electronic device is not used continuously for a predetermined time, a screen output may be terminated as in a sleep state. When a specified user input occurs in a state that a screen output is terminated, an electronic device may output a specified function screen, for example, a user authentication screen or a specific application execution screen.

In outputting the specified function screen, an electronic device may use the entire screen area of a display according to the related art. Additionally, in outputting a function screen of a specific application, an electronic device may have difficulties in performing a control to output only functions specified by a user among functions of the specific application according to the related art.

The above information is presented as background information only to assist with an understanding of the present disclosure. No determination has been made, and no assertion is made, as to whether any of the above might be applicable as prior art with regard to the present disclosure.

### SUMMARY OF THE INVENTION

Aspects of the present disclosure are to address at least the above-mentioned problems and/or disadvantages and to provide at least the advantages described below. Accordingly, an aspect of the present disclosure is to provide a screen controlling method for activating a screen area of a display corresponding to the position or size of a gesture inputted in a state that a screen output is terminated and displaying at least a partial function screen of an application that is differently designated according to the type or form of the gesture, on the activated screen area, and an electronic device for supporting the same.

Another aspect of the present disclosure is to provide a screen controlling method for performing the movement or enlargement/reduction of the screen area according to a gesture inputted in a state that at least a partial function screen of a designated application is outputted.

In accordance with an aspect of the present disclosure, an electronic device is provided. The electronic device includes a touch screen display configured to receive a user input, and a processor configured to analyze a first user input received in a state that a screen output of the display is terminated, activate a partial screen area of the display based on the analyzed result, and output at least a partial function screen of a designated application to the activated screen area based on the analyzed result.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of an electronic device relating to screen control according to various embodiments of the present disclosure;
FIG. 2 is a view illustrating a processor according to various embodiments of the present disclosure;
FIG. 3 is a flowchart illustrating an operating method of an electronic device relating to screen control according to various embodiments of the present disclosure;
FIG. 4 is a flowchart illustrating an operating method of an electronic device relating to screen control when a function screen of a designated application is outputted according to various embodiments of the present disclosure;
FIG. 5 is a view illustrating a screen control for a function screen output of a designated application according to various embodiments of the present disclosure;
FIG. 6 is a view illustrating a screen control according to the position or size of a user input according to various embodiments of the present disclosure;
FIG. 7 is a view illustrating a function execution included in a function screen of a designated application according to various embodiments of the present disclosure;
FIG. 8 is a view illustrating a screen control depending on the type, form, position, or size of a user input according to various embodiments of the present disclosure;
FIG. 9 is a view illustrating a screen control relating to a screen area movement in a state that a function screen of a designated application is outputted according to various embodiments of the present disclosure;
FIG. 10 is a view illustrating a screen control relating to a screen area enlargement/reduction in a state that a function screen of a designated application is outputted according to various embodiments of the present disclosure;
FIG. 11 is a view illustrating a screen control relating to a function screen output of a timer application according to various embodiments of the present disclosure;
FIG. 12 is a view illustrating a screen control relating to a memo creation screen output of a memory application according to various embodiments of the present disclosure;
FIG. 13 is a view illustrating a screen control relating to a memo list screen output of a memo application according to various embodiments of the present disclosure;
FIG. 14 is a view illustrating a screen control relating to a function screen output of a flash application according to various embodiments of the present disclosure;
FIG. 15 is a view illustrating a screen control relating to a function screen output of a contact application according to various embodiments of the present disclosure;
FIG. 16 is a block diagram of an electronic device according to various embodiments of the present disclosure; and
FIG. 17 is a block diagram illustrating a program module according to various embodiments of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The term "include," "comprise," and "have", or "may include," or "may comprise" and "may have" used herein indicates disclosed functions, operations, or existence of elements but does not exclude other functions, operations or elements.

For instance, the expression "A or B", or "at least one of A or/and B" may indicate include A, B, or both A and B. For instance, the expression "A or B", or "at least one of A or/and B" may indicate (1) at least one A, (2) at least one B, or (3) both at least one A and at least one B.

The terms such as "1st", "2nd", "first", "second", and the like used herein may refer to modifying various different elements of various embodiments of the present disclosure, but do not limit the elements. For instance, "a first user device" and "a second user device" may indicate different users regardless of the order or the importance. For example, a first component may be referred to as a second component and vice versa without departing from the scope of the present disclosure.

In various embodiments of the present disclosure, it will be understood that when a component (for example, a first component) is referred to as being "(operatively or communicatively) coupled with/to" or "connected to" another component (for example, a second component), the component may be directly connected to the other component or connected through another component (for example, a third component). In various embodiments of the present disclosure, it will be understood that when a component (for example, a first component) is referred to as being "directly connected to" or "directly access" another component (for example, a second component), another component (for example, a third component) does not exist between the component (for example, the first component) and the other component (for example, the second component).

The expression "configured to" used in various embodiments of the present disclosure may be interchangeably used with "suitable for", "having the capacity to", "designed to", "adapted to", "made to", or "capable of" according to a situation, for example. The term "configured to" may not necessarily mean "specifically designed to" in terms of hardware. Instead, the expression "a device configured to" in some situations may mean that the device and another device or part are "capable of". For example, "a processor configured (or set) to perform A, B, and C" in a phrase may mean a dedicated processor (for example, an embedded processor) for performing a corresponding operation or a generic-purpose processor (for example, a central processing unit (CPU) or application processor (AP)) for performing corresponding operations by executing at least one software program stored in a memory device.

Terms used in various embodiments of the present disclosure are used to describe specific embodiments of the present disclosure, and are not intended to limit the scope of other embodiments. The terms of a singular form may include plural forms unless they have a clearly different meaning in the context. Otherwise indicated herein, all the terms used herein, which include technical or scientific terms, may have the same meaning that is generally understood by a person skilled in the art. In general, the terms defined in the dictionary should be considered to have the same meaning as the contextual meaning of the related art, and, unless clearly defined herein, should not be understood abnormally or as having an excessively formal meaning. In any cases, even the terms defined in this specification cannot be interpreted as excluding embodiments of the present disclosure.

According to various embodiments of the present disclosure, electronic devices may include at least one of smartphones, tablet personal computers (PCs), mobile phones, video phones, electronic book (e-book) readers, desktop PCs, laptop PCs, netbook computers, workstation server, personal digital assistants (PDAs), portable multimedia player (PMPs), Moving Picture Experts Group phase 1 or phase 2 (MPEG-1 or MPEG-2) audio layer 3 (MP3) players, mobile medical devices, cameras, and wearable devices. According to various embodiments of the present disclosure, the wearable devices may include at least one of accessory types (e.g., watches, rings, bracelets, anklets, necklaces, glasses, contact lenses, or head-mounted-devices (HMDs)), fabric or garment integrated types (for example, e-apparel), body-mounted types (for example, skin pads or tattoos), or bio-implantation types (for example, implantable circuits).

According to some embodiments of the present disclosure, an electronic device may be home appliance. The home appliance may include at least one of, for example, televisions, digital versatile disc (DVD) players, audios, refrigerators, air conditioners, cleaners, ovens, microwave ovens, washing machines, air cleaners, set-top boxes, home automation control panels, security control panels, television (TV) boxes (e.g., Samsung HomeSyncTM, Apple TVTM or Google TVTM), game consoles (for example, Xbox™ and PlayStation™), electronic dictionaries, electronic keys, camcorders, and electronic picture frames.

According to some embodiments of the present disclosure, an electronic device may include at least one of various medical devices supporting call forwarding service (for example, various portable measurement devices (for example, glucometers, heart rate meters, blood pressure meters, temperature meters, etc.), magnetic resonance angiography (MRA) devices, magnetic resonance imaging (MRI) devices, computed tomography (CT) devices, medical imaging devices, ultrasonic devices, etc.), navigation devices, global navigation satellite system (GNSS), event data recorders (EDRs), flight data recorders (FDRs), vehicle infotainment devices, marine electronic equipment (for example, marine navigation systems, gyro compasses, etc.), avionics, security equipment, vehicle head units, industrial or household robots, financial institutions' automatic teller's machines (ATMs), or stores' point of sales (POS) or internet of things (for example, bulbs, various sensors, electric or gas meters, sprinkler systems, fire alarms, thermostats, street lights, toasters, exercise equipment, hot water tanks, heaters, boilers, etc.).

In various embodiments of the present disclosure, an electronic device may include at least one of part of furniture or buildings/structures supporting call forwarding service, electronic boards, electronic signature receiving devices, projectors, and various measuring instruments (for example, water, electricity, gas, or radio signal measuring instruments). An electronic device according to various embodiments of the present disclosure may be one of the above-mentioned various devices or a combination thereof. Additionally, an electronic device according to an embodiment of the present disclosure may be a flexible electronic device. Additionally, an electronic device according to an embodiment of the present disclosure is not limited to the above-mentioned devices and may include a new kind of an electronic device according to the technology development.

Hereinafter, an electronic device according to various embodiments of the present disclosure will be described in more detail with reference to the accompanying drawings. The term "user" in this disclosure may refer to a person using an electronic device or a device using an electronic device (for example, an artificial intelligent electronic device).

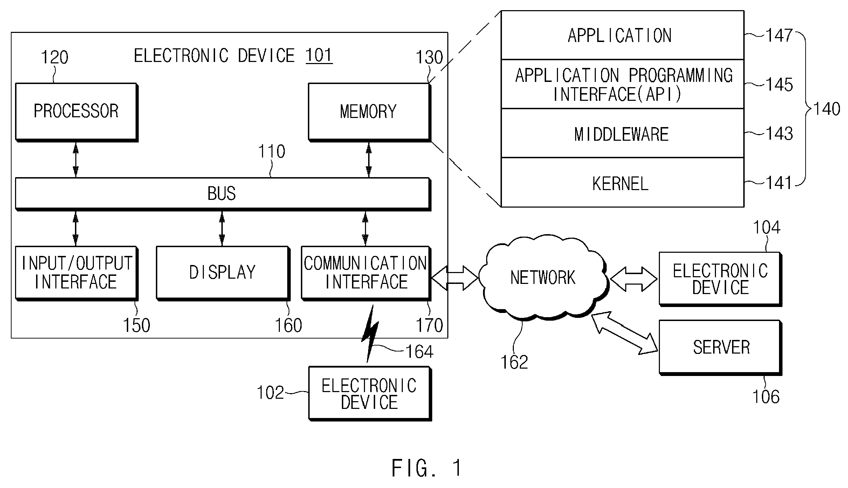

FIG. 1 is a block diagram of an electronic device relating to screen control according to various embodiments of the present disclosure. According to various embodiments of the present disclosure, the electronic device 101 may perform a function relating to screen control. For example, the electronic device 101 may perform a control to turn-on/turn-off a screen (for example, a screen of the display 160) or divide and output a screen area. According to an embodiment of the present disclosure, if a designated user input occurs or a user input does not occur for a predetermined time, the electronic device 101 may switch to a designated state (for example, a sleep state) by terminating a screen output (or turning off a screen). According to various embodiments of the present disclosure, in a state that a screen output is terminated such as in the sleep state, the electronic device 101 may activate a partial area of the screen in response to a designated gesture input and output at least a partial function screen of an application (for example, the application 147) that is differently designated according to the gesture input, to the activated screen area. Additionally, the electronic device 101 may move, enlarge, or reduce an activation area of the screen according to a gesture input inputted in a state that at least a partial function screen of the application is outputted, and output the function screen in correspondence thereto.

Referring to FIG. 1, the electronic device 101 that performs a function relating to the above-mentioned screen control may include a bus 110, a processor 120, a memory 130, an input/output interface 150, a display 160, and a communication interface 170. According to an embodiment of the present disclosure, the electronic device 101 may omit at least one of the components or may additionally include a different component.

The bus 110, for example, may include a circuit for connecting the components 110 to 170 to each other and delivering a communication (for example, control message and/or data) between the components 110 to 170.

The processor 120 may include at least one of a CPU, an AP, and a communication processor (CP). The processor 120, for example, may execute calculation or data processing for control and/or communication of at least one another component of the electronic device 101.

According to various embodiments of the present disclosure, the processor 120 may analyze a first user input (for example, a gesture input) relating to screen control and activate a partial area of a screen based on a part of the analysis result. Additionally, the processor 120 may select at least one of functions of an application (for example, the application 147) to be executed based on a part of the analysis result. The processor 120 may perform a control to output at least a partial function screen of the selected application to the activated screen area.

According to various embodiments of the present disclosure, the processor 120 may analyze a second user input (for example, a gesture input) occurring in a state that the function screen is outputted to the screen area, and move, enlarge, or reduce the screen area based on a part of the analysis result. Additionally, the processor 120 may perform a control to output the function screen to correspond to the changed screen area. According to various embodiments of the present disclosure, when the screen area is changed in correspondence to the second user input, the processor 120 may change the function screen based on a part of an analysis result of the second user input. For example, the processor 120 may perform a control to output the function screen by adding at least one another function of the application to the function screen, or removing at least one from functions included in the function screen, or replacing a function with another function.

The memory 130 may include volatile and/or nonvolatile memory. The memory 130, for example, may store instructions or data relating to at least one another component of the electronic device 101. According to an embodiment of the present disclosure, the memory 130 may store software and/or program 140. The program 140 may include a kernel 141, a middleware 143, an application programming interface (API) 145, and/or an application program (or an application) 147. At least part of the kernel 141, the middleware 143, and the API 145 may be called an operating system (OS).

The kernel 141, for example, may control or manage system resources (for example, the bus 110, the processor 120, the memory 130, and so on) used for performing operations or functions implemented in other programs (for example, the middleware 143, the API 145, or the application program 147). Additionally, the kernel 141 may provide an interface for controlling or managing system resources by accessing an individual component of the electronic device 101 from the middleware 143, the API 145, or the application program 147.

The middleware 143, for example, may serve as an intermediary role for exchanging data as the API 145 or the application program 147 communicates with the kernel 141.

Additionally, the middleware 143 may process at least one job request received from the application program 147 according to a priority. For example, the middleware 143 may assign to at least one application program 147 a priority for using a system resource (for example, the bus 110, the processor 120, or the memory 130) of the electronic device 101. For example, the middleware 143 may perform scheduling or load balancing on the at least one job request by processing the at least one job request according to the priority assigned to the at least one job request.

The API 145, as an interface for allowing the application 147 to control a function provided from the kernel 141 or the middleware 143, may include at least one interface or function (for example, an instruction) for file control, window control, image processing, or character control.

The application 147, as a set of a series of programs (or instructions) for performing at least one designated function, for example, may include a content execution application (for example, a music playback application) for executing a variety of contents, a camera application, a timer application, a memo application, a flash application, or a contact application.

The input/output interface 150, for example, may serve as an interface for delivering instructions or data inputted from a user or another external device to another component(s) of the electronic device 101. Additionally, the input/output interface 150 may output instructions or data received from another component(s) of the electronic device 101 to a user or another external device.

The display 160, for example, may include a liquid crystal display (LCD), a light emitting diode (LED) display, an organic light emitting diode (OLED) display, a microelectromechanical systems (MEMS) display, or an electronic paper display. The display 160, for example, may display a variety of contents (for example, text, image, video, icon, symbol, and so on) to a user. The display 160 may include a touch screen, and for example, may receive a touch, gesture, proximity, or hovering input by using an electronic pen or a user's body part.

The communication interface 170, for example, may set a communication between the electronic device 101 and an external device (for example, the first external electronic device 102, the second external electronic device 104, or the server 106). For example, the communication interface 170 may communicate with an external device (for example, the second external electronic device 104 or the server 106) in connection to the network 162 through wireless communication or wired communication.

The wireless communication, as a cellular communication protocol, may use at least one of long-term evolution (LTE), LTE Advance (LTE-A), code division multiple access (CDMA), wideband CDMA (WCDMA), universal mobile telecommunications system (UMTS), wireless broadband (WiBro), global system for mobile communications (GSM), and so on. Additionally, the wireless communication, for example, may include a short range communication 164. The short range communication 164, for example, may include at least one of Wi-Fi, Bluetooth (BT), near field communication (NFC), global positioning system (GPS), and so on. The GNSS may include at least one of GPS, Glonass, and Beidou Navigation Satellite System (hereinafter referred to as Beidou) and Galileo, that is, the European global satellite-based navigation system. Hereinafter, GPS and GNSS may be interchangeably used. The wired communication, for example, may include at least one of universal serial bus (USB), high definition multimedia interface (HDMI), recommended standard 232 (RS-232), plain old telephone service (POTS), and so on. The network 162 may include telecommunications network, for example, at least one of computer network (for example, local area network (LAN) or wide area network (WAN)), internet, and telephone network.

Each of the first and second external electronic devices 102 and 104 may be the same or different type of the electronic device 101. According to an embodiment of the present disclosure, the server 106 may include a group of one or more servers. According to various embodiments of the present disclosure, all or part of operations executed on the electronic device 101 may be executed on another one or more electronic devices (for example, the electronic device 102 or 104 or the server 106). According to an embodiment of the present disclosure, when the electronic device 101 performs a certain function or service automatically or by a request, it may request at least part of a function relating thereto from another device (for example, the electronic device 102 or 104 or the server 106) instead of or in addition to executing the function or service by itself. The other electronic device (for example, the external electronic device 102 or 104 or the server 106) may execute a requested function or an additional function and may deliver an execution result to the electronic device 101. The electronic device 101 may provide the requested function or service as it is or by processing the received result additionally. For this, for example, cloud computing, distributed computing, or client-server computing technology may be used.

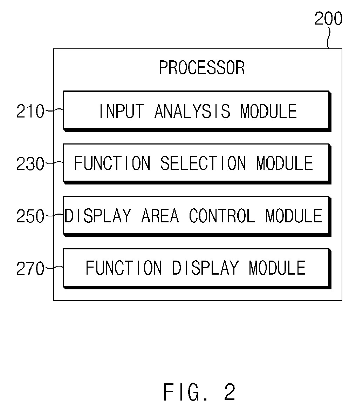

FIG. 2 is a view illustrating a processor according to various embodiments of the present disclosure. According to various embodiments of the present disclosure, the processor 200 may have the same or similar configuration to the processor 120 shown in FIG. 1. The processor 200 shown in FIG. 2 may include only components for describing a screen control related function. According to an embodiment of the present disclosure, at least one another component may be further included in the processor 200 or at least one among components shown may be omitted.

Referring to FIG. 2, the processor 200 may include an input analysis module 210, a function selection module 230, a display area control module 250, and a function display module 270. The input analysis module 210 may analyze a screen control related user input. According to an embodiment of the present disclosure, the input analysis module 210 may analyze a gesture input (for example, a first user input) occurring in a state that a screen output is terminated. Additionally, the input analysis module 210 may analyze a gesture input (for example, a second user input) occurring in a state that at least a partial function screen of a designated application is outputted.

According to various embodiments of the present disclosure, the input analysis module 210 may analyze the type, form, position, or size (for example, the size of an inputted area) of the gesture input. In relation to this, the type of a gesture input may be classified into tap, hold, move, flick, drag and drop, or pinch zoom in/out according to an input method, and may be classified in more detail according to the number of touch objects (for example, fingers). For example, in the case of a tap input, when an input is made with one finger, it may be classified as one tap or tap and when an input is made with two fingers, it may be classified as double tap. Operational characteristics according to the type of the above-mentioned gesture input will be described in detail through an embodiment described later.

The function selection module 230 may select at least one function of an application to be executed. According to an embodiment of the present disclosure, the function selection module 230 may select an application to be executed from applications (for example, the application 147 of FIG. 1) included in an electronic device (for example, the electronic device 101 of FIG. 1) based on a result analyzed through the input analysis module 210. For example, when a gesture inputted according to the analysis result is a circle move input (for example, an input for moving in a circle without releasing a finger from a touch input device after touching a predetermined point of the touch recognition device (for example, a touch screen) by one finger), the function selection module 230 may select a music playback application. Additionally, the function selection module 230 may select at least one function from functions included in the selected application. For example, the function selection module 230 may select a function for displaying information on music in playback, a playback function, a pause function, a playback stop function, or a function for selecting previous/next music from functions of the music playback application in response to the circle move input.

The display area control module 250 may perform a function for controlling a screen area (or a display area) where the selected function screen is to be outputted. According to an embodiment of the present disclosure, the display area control module 250 may activate only the screen area in the entire screen of a display (for example, the display 160 of FIG. 1). For example, the display area control module 250 may select the screen area based on a result analyzed through the input analysis module 210, and activate the screen area to allow the selected function screen to be outputted to the screen area. In relation to this, the display area control module 250 may select the screen area with the same or similar location and size to an area where the gesture is inputted.

According to various embodiments of the present disclosure, when the activated screen area is changed, for example, the screen area is moved, enlarged, or reduced, the display area control module 250 may deactivate a screen area before the change and activate a newly selected screen area.

The function display module 270 may perform a control to output the selected function screen to the activated screen area. According to an embodiment of the present disclosure, the function display module 270 may enlarge or reduce the size of the selected function screen in order to correspond to the size of the activated screen area. Alternatively, the function display module 270 may perform a control to output the selected function screen by the activated screen area. For example, the function display module 270 may perform a control to output the center point (or weight center point) of the selected function screen in correspondence to the center point of the activated screen area but not to output an area out of the activated screen area.

According to various embodiments of the present disclosure, when the screen area is changed, the function display module 270 may perform a control to output the function screen to correspond to the screen area. According to an embodiment of the present disclosure, when the screen area is moved, the function display module 270 may perform a control to move and output the function screen identically. When the screen area is enlarged or reduced, the function display module 270 may perform a control to enlarge or reduce the function screen identically and output it. For example, according to an embodiment of the present disclosure, the function display module 270 may perform a control to output an output area additionally by the enlarged ratio based on the center point of the function screen or not to output a previously outputted area by the reduced ratio.

As mentioned above, according to various embodiments of the present disclosure, an electronic device may include a touch screen display configured to receive a user input and a processor configured to analyze a first user input received in a state that a screen output of the display is terminated, to activate a partial screen area of the display based on the analyzed result, and to output an execution screen of a designated application to the partial screen area based on the analyzed result. The execution screen may include at least one object related to at least one function of the designated application.

According to various embodiments of the present disclosure, the partial screen area may be an area with a same or similar size to a size of an area where the first user input is inputted, at a screen position of the display corresponding to a position of the first user input.

According to various embodiments of the present disclosure, the at least one function of the designated application may be selected by the processor based on at least one of an input method of the first user input, the number of touch objects of the first user input, and a form of the first user input.

According to various embodiments of the present disclosure, the designated application may include at least one of a contents execution application, a camera application, a timer application, a memo application, a flash application, and a contact application.

According to various embodiments of the present disclosure, the processor may enlarge, reduce or crop the execution screen such that a size of the execution screen corresponds to a size of the partial screen area.

According to various embodiments of the present disclosure, the processor may move, enlarge, or reduce the partial screen area based on a second user input received in a state that the execution screen is outputted.

According to various embodiments of the present disclosure, when the second user input is an input relating to a movement of the partial screen area, the processor may deactivate the partial screen area and activate another partial screen area of the display based on analyzed result of the second user input, and move the execution screen to the another partial screen area.

According to various embodiments of the present disclosure, when the second user input is an input relating to an enlargement of the partial screen area, the processor may activate an additional screen area of the display by the enlarged ratio based on a center point of the execution screen. The processor may proportionally enlarge the execution screen such that a size of the execution screen corresponds to a size of an enlarged screen area including the partial screen area and the additional screen area, or output another execution screen that is newly collected from the designated application, such that a size of the another execution screen corresponds to a size of the enlarged screen area, to the enlarged screen area.

According to various embodiments of the present disclosure, when the second user input is an input relating to a reduction of the partial screen area, the processor may deactivate a part of the partial screen area by the reduced ratio based on a center point of the execution screen. The processor may terminate an output of a part of the execution screen corresponding to the part of the partial screen area, or proportionally reduce the execution screen such that a size of the execution screen corresponds to a size of the other part of the partial screen area.

According to various embodiments of the present disclosure, based on a second user input received in a state that the execution screen is outputted, the processor may add at least one other object related to at least one other function of the designated application to the execution screen, remove at least one of the at least one object from the execution screen, or replace at least one of the at least one object with the at least one other object.

According to various embodiments of the present disclosure, the processor may perform the at least one function of the designated application based on a second user input received in a state that the execution screen is outputted.

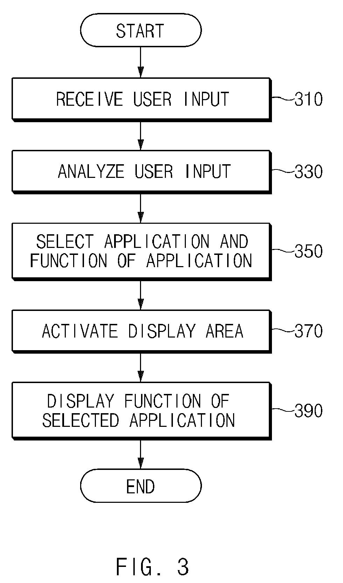

FIG. 3 is a flowchart illustrating an operating method of an electronic device relating to screen control according to various embodiments of the present disclosure.

Referring to FIG. 3, an electronic device (for example, the electronic device 101 of FIG. 1) may receive a user input in operation 310 in a state that a screen output is terminated. According to an embodiment of the present disclosure, the electronic device may receive a designated gesture input in a state that the screen of the electronic device is turned off as in a sleep state.

In operation 330, the electronic device may analyze the received user input. According to an embodiment of the present disclosure, the electronic device may analyze the user input (for example, a gesture input), and determine the type, form, and input position of the user input or the size of the inputted area.

In operation 350, the electronic device may select an application to be outputted to a screen and at least some functions of the application based on the analyzed result. According to various embodiments of the present disclosure, the electronic device may select an application and a function differently according to the type or form of the gesture input. According to an embodiment of the present disclosure, when the gesture input is a circle move input (for example, an input for moving in circle without releasing a finger from a touch screen after touching a predetermined point of the touch screen by one finger), the electronic device may select a music information display function, a pause function, a playback stop function, or a previous/next music selection function of a music playback application.

In operation 370, the electronic device may activate a screen area (or a display area) in order to output at least a partial function screen of the selected application. According to various embodiments of the present disclosure, the electronic device may select and activate only a partial area of the entire screen of a display (for example, the display 160 of FIG. 1) based on the analyzed result. According to an embodiment of the present disclosure, the electronic device may select and activate the screen area based on the position of the gesture input and the size of an inputted area. For example, the electronic device may select the screen area with the same or similar location and size to the position of the gesture input and the size of an inputted area and activate the selected screen area.

In operation 390, the electronic device may output at least a partial function screen of the selected application to the activated screen area. According to an embodiment of the present disclosure, the electronic device may enlarge or reduce the function screen to correspond to the screen area and output it. Alternatively, the electronic device may crop the function screen to correspond to the screen area and output it.

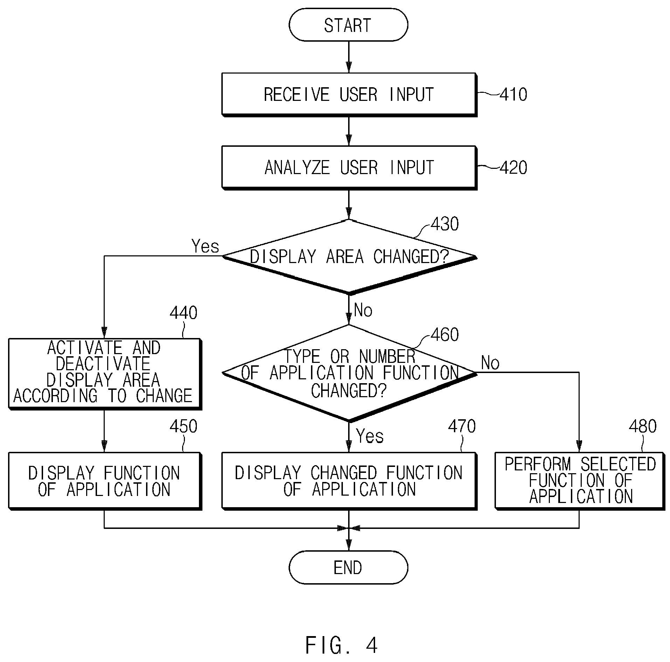

FIG. 4 is a flowchart illustrating an operating method of an electronic device relating to screen control when a function screen of a designated application is outputted according to various embodiments of the present disclosure.

Referring to FIG. 4, an electronic device (for example, the electronic device 101 of FIG. 1) may receive a user input in operation 410 in a state that at least a partial function screen of a designated application is outputted. According to an embodiment of the present disclosure, the electronic device, as mentioned with reference to FIG. 3, may receive a designated gesture input in a state that at least a partial function screen of the selected application in correspondence to a gesture input inputted when a screen output is terminated.

In operation 420, the electronic device may analyze the user input. For example, the electronic device may determine the type, form, and input position of the user input or the size of the inputted area.

In operation 430, the electronic device may determine when the user input is an input relating to a change of a screen area (or a display area) where the function screen is outputted based on the analysis result of the user input. For example, the electronic device may determine whether the user input is a gesture input set to change the screen area. According to an embodiment of the present disclosure, when the user input is a double tap move input (for example, an input for moving in a predetermined direction without releasing fingers from a touch screen after touching a predetermined point of the touch screen by the two fingers) or a drag and drop input (for example, an input for selecting a designated object outputted to a screen and moving it in a predetermined direction and then, releasing the selection), the electronic device may determine it as a gesture input set to change the screen area.

According to various embodiments of the present disclosure, when the user input is a gesture input set to change the screen area, in operation 440, the electronic device may perform activation/deactivation processing of the screen area according to the change. According to an embodiment of the present disclosure, the electronic device may deactivate a screen area before the change. Additionally, the electronic device may activate a newly selected screen area.

In operation 450, the electronic device may output a function screen of a selected application to correspond to the newly selected screen area. According to an embodiment of the present disclosure, the electronic device may enlarge or reduce the function screen to correspond to the changed screen area. Alternatively, the electronic device may crop the function screen to correspond to the screen area and output it. In relation to this, the electronic device may terminate the output of a function screen outputted to a screen area before the change.

According to various embodiments of the present disclosure, when the user input is not a gesture input set to change the screen area, in operation 460, the electronic device may determine whether the user input is an input relating to a change of the type or number of the selected functions. According to an embodiment of the present disclosure, when the user input is a flick input (for example, an input for releasing a finger from a touch screen while moving in a designated direction within a predetermined time after touching a predetermined point of the touch screen by the finger), the electronic device may determine it as a gesture input set to change the type or number of the selected functions.

According to various embodiments of the present disclosure, when the user input is a gesture input set to change the type or number of the selected functions, in operation 470, the electronic device may output a function screen where the type or number is changed based on an analysis result of the user input. According to an embodiment of the present disclosure, the electronic device may add at least one another function of the application to the function screen outputted to a screen area before the change, or remove at least one from functions included in the function screen, or replace a function with another function and output it.

According to various embodiments of the present disclosure, when the user input is not a gesture input set to change the type or number of the selected functions, in operation 480, the electronic device may perform a designated function among functions included in the function screen. According to an embodiment of the present disclosure, the electronic device may select and execute a designated function among functions included in the function screen based on an analysis result of the user input. For example, the electronic device may perform a function displayed at a position where the user input occurs.

As mentioned above, according to various embodiments of the present disclosure, a screen controlling method of an electronic device includes receiving a first user input in a state that a screen output of a display is terminated, analyzing the first user input, selecting a partial screen area of the display based on the analyzed result, activating the partial screen area, and outputting an execution screen of a designated application to the partial screen area based on the analyzed result. The execution screen may include at least one object related to at least one function of the designated application.

According to various embodiments of the present disclosure, the selecting of the partial screen area may include selecting an area which has a same or similar size to a size of an area where the first user input is inputted, at a screen position of the display corresponding to a position of the first user input as the partial screen area.

According to various embodiments of the present disclosure, the at least one function of the designated application may be selected based on at least one of an input method of the first user input, the number of touch objects of the first user input, and a form of the first user input.

According to various embodiments of the present disclosure, the outputting the execution screen may include enlarging, reducing or cropping the execution screen such that a size of the execution screen corresponds to a size of the partial screen area.

According to various embodiments of the present disclosure, the screen controlling method may further include moving, enlarging, or reducing the partial screen area based on a second user input received in a state that the execution screen is outputted.

According to various embodiments of the present disclosure, the screen controlling method may further include when the second user input is an input relating to a movement of the partial screen area, deactivating the partial screen area, activating another partial screen area of the display based on analyzed result of the second user input, and moving the execution screen to the another partial screen area.

According to various embodiments of the present disclosure, the screen controlling method may further include when the second user input is an input relating to an enlargement of the partial screen area, activating an additional screen area of the display by the enlarged ratio based on a center point of the execution screen. The screen controlling method may further include proportionally enlarging the execution screen such that a size of the execution screen corresponds to a size of an enlarged screen area including the partial screen area and the additional screen area, or outputting another execution screen that is newly collected from the designated application, such that a size of the another execution screen corresponds to a size of the enlarged screen area, to the enlarged screen area.

According to various embodiments of the present disclosure, the screen controlling method may further include when the second user input is an input relating to a reduction of the partial screen area, deactivating a part of the partial screen area by the reduced ratio based on a center point of the execution screen. The screen controlling method may further include terminating an output of a part of the execution screen corresponding to the part of the partial screen area, or proportionally reducing the execution screen such that a size of the execution screen corresponds to a size of the other part of the partial screen area.

According to various embodiments of the present disclosure, the screen controlling method may further include based on a second user input received in a state that the execution screen is outputted, adding at least one other object related to at least one other function of the designated application to the execution screen, removing at least one of the at least one object from the execution screen, or replacing at least one of the at least one object with the at least one other object.

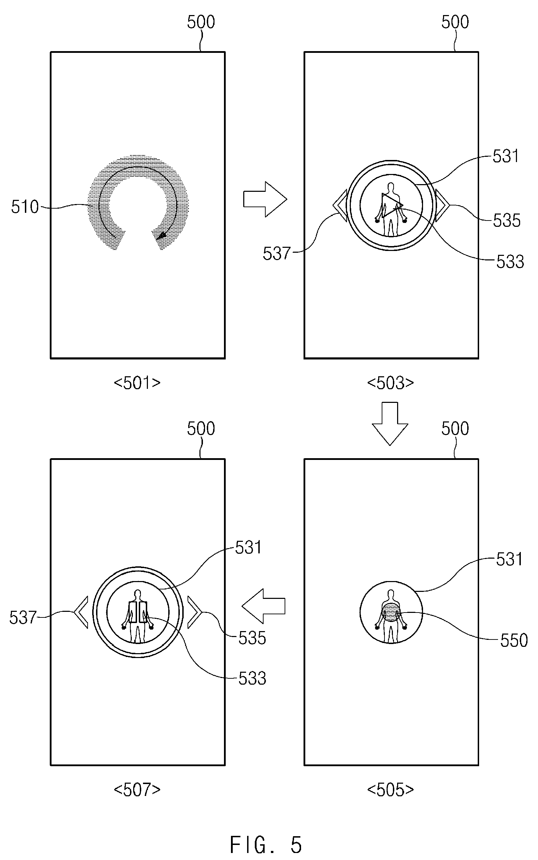

FIG. 5 is a view illustrating a screen control for a function screen output of a designated application according to various embodiments of the present disclosure.

Referring to FIG. 5, an electronic device (for example, the electronic device 101 of FIG. 1) may receive a designated user input 510 in a state (for example, an output termination state) that a screen 600 of a display (for example, the display 160 of FIG. 1) is turned off. Additionally, the electronic device may analyze the type, form, position, or size of the user input 510. According to various embodiments of the present disclosure, the electronic device may activate a partial area of the screen 500 based on at least a part of the analyzed result. According to an embodiment of the present disclosure, the electronic device may select and activate a partial area of the screen 500 with the same or similar location and size to the location where the user input 510 occurs and the size of an area where the user input 510 is inputted. In the drawings, as shown in a state 501, as a circle move input (for example, an input for moving in circle without releasing a finger from the screen 500 after touching a predetermined point of the screen 500 by one finger) is inputted as the user input 510, the electronic device may display a state of activating a partial area of the screen 500 with the same size as the position of the input and the circle.

According to various embodiments of the present disclosure, the electronic device may select at least some functions of an application (for example, the application 147 of FIG. 1) to be outputted to the activated screen area. According to an embodiment of the present disclosure, the electronic device may select a function of an application is differently designated according to the type and form of the user input 510. In the drawings shown, the electronic device represents a state that a music information display function, a playback function, a pause function, a playback stop function, or a previous/next music selection function of a music playback application in correspondence to the circle move input. For example, the electronic device, as shown in a state 503, may output a music information display object 531, a play/pause button 533, a next music selection button 535, or a previous music selection button 537 of a music playback application, to the activated screen area.

In relation to this, the music information display object 531 may output information such as the album image, song name, artist name, or playback time of music being played currently. The play/pause button 533 may perform a function for playing or pausing selected music. For example, when the play/pause button 533 is selected, the electronic device may deliver data and an instruction (or request) relating to playing or pausing the selected music. According to an embodiment of the present disclosure, when the play/pause button 533 is selected, an image (or icon) may be changed and outputted. When the next music selection button 535 and/or the previous music selection button 537 are/is selected, the electronic device may deliver data and an instruction (or request) relating to playing the next or previous music of music being played currently, to a corresponding module.

According to various embodiments of the present disclosure, when a user input does not occur for a predetermined time in the state 503, the electronic device, as shown in a state 505, may change a part of a function screen being outputted and output it. In the drawings shown, the electronic device may display a state that the play/pause button 533, the next music selection button 535, and the previous music selection button 537 are not outputted, on the function screen. According to an embodiment of the present disclosure, the electronic device may turn-off the entire screen 500 by terminating the output state of the activated screen area.

According to various embodiments of the present disclosure, when a designated user input 550 occurs in the state 505, the electronic device may switch the output state of the function screen. According to an embodiment of the present disclosure, the electronic device may restore the function screen to the state 503. For example, the electronic device may output the play/pause button 533, the next music selection button 535, and the previous music selection button 537 again. Alternatively, the electronic device may change the function screen into the state 507. For example, the electronic device may output the play/pause button 533, the next music selection button 535, and the previous music selection button 537 again, and change and output the image of the play/pause button 533.

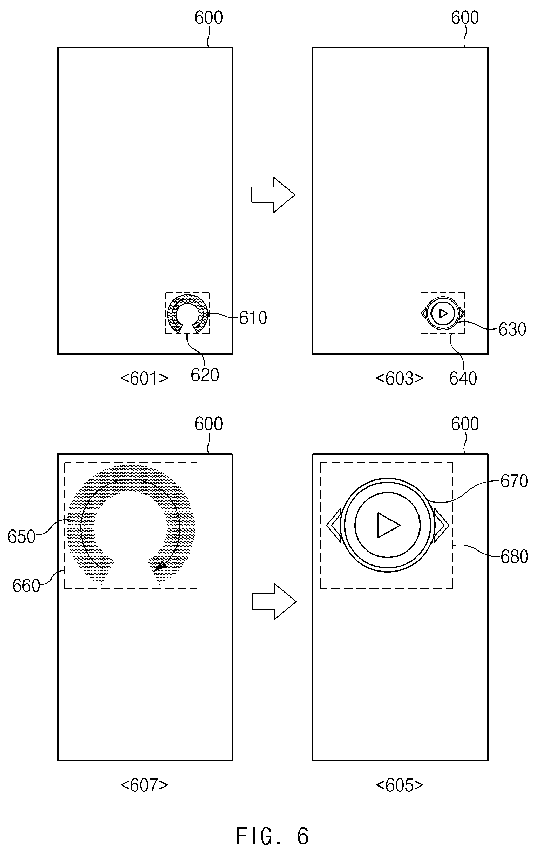

FIG. 6 is a view illustrating a screen control according to the position or size of a user input according to various embodiments of the present disclosure.

Referring to FIG. 6, when a screen 600 of a display (for example, the display 160 of FIG. 1) is turned off, an electronic device (for example, the electronic device 101 of FIG. 1) may differently output a function screen according to the position or size of an inputted user input (for example, a gesture input). According to an embodiment of the present disclosure, the electronic device may output the function screen with the same or similar position and size to the position and size of the user input.

As shown in the drawing, when a gesture 610 having a first size (for example, the size of an input) 620 is inputted at a first position (for example, a predetermined right lower end point) of a screen 600 in a state 601, the electronic device may activate a first screen area 640 corresponding to the first position and the first size 620. Additionally, the electronic device, as shown in a state 603, may enlarge, reduce, or crop the function screen 630 of a designated application to correspond to the first position and the first size 620 and output it to the first screen area 640.

According to various embodiments of the present disclosure, when a gesture 650 having a second size 660 different from the first size 620 is inputted at a second position (for example, a predetermined left upper end point) different from the first position as shown in a state 607, the electronic device may activate a second screen area 680 corresponding to the second position and the second size 660. Accordingly, the electronic device, as shown in the state 605, may output a function screen 670 that is enlarged, reduced, or cropped to correspond to the second screen area 680.

According to various embodiments of the present disclosure, the electronic device may select an application and a function of an application differently according to the position or size of a user input. In the drawing shown, the electronic device displays a state of outputting a partial function screen of a music playback application in correspondence to a circle move input, but according to the position or size of a user input, the electronic device may output another function (for example, a music playback list display function) of another application (for example, a camera application) or the same application.

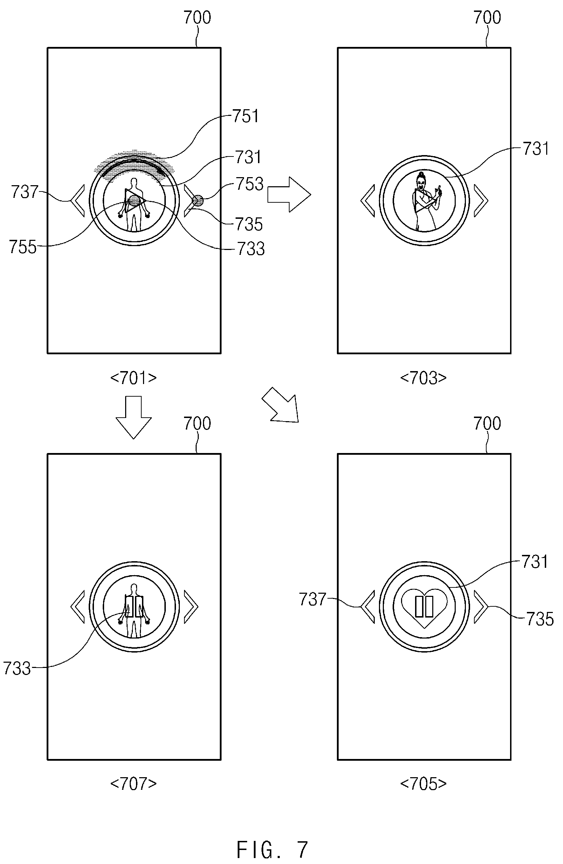

FIG. 7 is a view illustrating a function execution included in a function screen of a designated application according to various embodiments of the present disclosure.

Referring to FIG. 7, the electronic device (for example, the electronic device 101 of FIG. 1) may output a function screen of a designated application to a partial area of a screen 700 of a display (for example, the display 160 of FIG. 1). The drawing shown may represent a state that a function screen of a music playback application is outputted. For example, the electronic device, as shown in a state 701, may output a function screen including a music information display object 731, a play/pause button 733, a next music selection button 735, or a previous music selection button 737, to a partial area of the screen 700.

According to various embodiments of the present disclosure, as shown in the state 701, the electronic device may receive a designated user input on the function screen. According to an embodiment of the present disclosure, the electronic device may receive an input for selecting objects included in the function screen. For example, the electronic device may receive an input for selecting a music information display object 731, a touch and move input 751 on an adjacent area of the music information display object 731 (for example, an input for moving along the outline of the music information display object 731 after touching one point of an adjacent area of the music information display object 731 by a finger), an input 753 for selecting the next music selection button 735/the previous music selection button 737, or an input 755 for selecting the play/pause button 733.

According to various embodiments of the present disclosure, when the touch and move input 751 on an adjacent area of the music information display object 731 occurs, the electronic device, as shown in a state 703, may play the selected music in correspondence to a movement direction and movement amount of a gesture input. Additionally, the electronic device may output information (for example, an album image) on the selected music to the music information display object 731.

According to various embodiments of the present disclosure, when the input 753 for selecting the next music selection button 735 or the previous music selection button 737 occurs, the electronic device, as shown in a state 705, may play music corresponding to the selected order. Additionally, the electronic device may output information on the selected music to the music information display object 731.

According to various embodiments of the present disclosure, when the input 755 for selecting the play/pause button 733 occurs, the electronic device, as shown in a state 707, may play or pause the selected music. Additionally, the electronic device may change and output the image of the play/pause button 733 according to a playback state of the selected music.

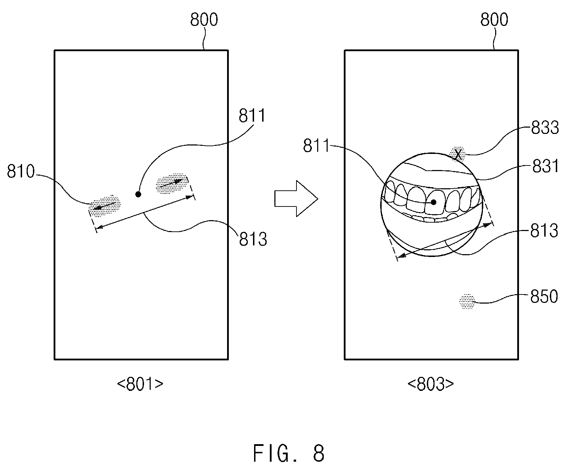

FIG. 8 is a view illustrating a screen control depending on the type, form, position, or size of a user input according to various embodiments of the present disclosure.

Referring to FIG. 8, an electronic device (for example, the electronic device 101 of FIG. 1), as shown in a state 801, may receive a designated user input 810 in a state that a screen 800 of a display (for example, the display 160 of FIG. 1) is turned off. The electronic device may analyze the type, form, position, or size of the user input 810. The drawing shown illustrates a state that a pinch-zoom-in input (for example, an input for moving fingers in respectively different opposite directions after touching a predetermined point of the screen 800 by two fingers) occurs as the user input 810. The electronic device may analyze the size (for example, length) 813 of an inputted area of a pinch-zoom-in input and a start input position (or the size 813 of an inputted area) 811 of a pinch-zoom-in input.

According to various embodiments of the present disclosure, the electronic device may activate a partial area of the screen 800 based on the position 811 and the size 813 of the user input 810. As shown in the drawing, the electronic device may activate a circular screen area 831 that uses the position 811 as the center point and the size 813 as the diameter. According to an embodiment of the present disclosure, the electronic device may activate a rectangular screen area that uses the position 811 as the start point (or the center point) and the size 813 as one side.

According to various embodiments of the present disclosure, the electronic device may select an application and at least some functions of an application based on the type or form of the user input 810. According to an embodiment of the present disclosure, when a pinch-zoom-in input occurs as the user input 810, the electronic device may select a camera application and select a capture function or a stop function of a camera application.

According to various embodiments of the present disclosure, the electronic device may output a function screen of the selected application to the activated screen area 831. As shown in the state 803, the electronic device may output a camera capture image to the screen area 831. Additionally, the electronic device may output the camera stop button 833 to an area adjacent to the screen area 831 or a partial area of the screen area 831. When the camera stop button 833 is outputted to an adjacent area of the activated screen area 831, the electronic device may activate and control the adjacent area.

According to various embodiments of the present disclosure, as shown in the state 803, in a state that a function screen of a camera application is outputted, the electronic device may perform a designated function of a camera in correspondence to the occurred user input 850. According to an embodiment of the present disclosure, when the user input 850 is an input for selecting one point of the screen 800, the electronic device may perform a capture function. Additionally, when the user input 850 is an input for selecting the camera stop button 833, the electronic device may terminate a camera application and also terminate the output of the function screen.

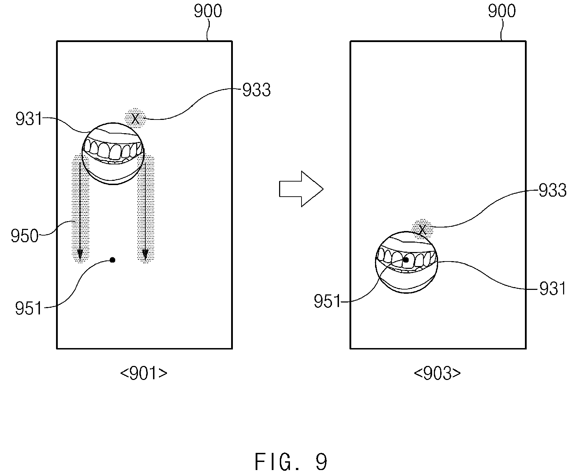

FIG. 9 is a view illustrating a screen control relating to a screen area movement in a state that a function screen of a designated application is outputted according to various embodiments of the present disclosure.

Referring to FIG. 9, an electronic device (for example, the electronic device 101 of FIG. 1), as shown in a state 901, may receive a user input 950 on the function screen in a state that a function screen of a designated application is outputted to a screen 900 of a display (for example, the display 160 of FIG. 1). The electronic device may analyze a user input 950 for the function screen, and determine whether the user input 950 is an input relating to a movement of the screen area 931 based on the analyzed result. For example, when the user input 950 is a double tap move input (for example, an input for moving in a predetermined direction without releasing fingers from the screen 900 after touching a predetermined point of the screen 900 by the two fingers) or a drag and drop input (for example, an input for selecting a designated object outputted to the screen 900 and moving it in a predetermined direction and then, releasing the selection), the electronic device may determine it as a gesture input set to move the screen area 931.

According to various embodiments of the present disclosure, when the user input 950 is a gesture input set to move the screen area 931, the electronic device may analyze a movement distance of the user input 950. For example, the electronic device may calculate a distance between the center point of the screen area 931 and the stop point 951 of the user input 950. Accordingly, as shown a state 903, the electronic device may move the function screen by the movement distance and output it. For example, the electronic device may activate the screen area 931 to correspond to the moved position, and output the function screen to the screen area 931. Additionally, the electronic device may move the outputted camera stop button 933 to an area adjacent to the screen area 931 and output it. In relation to this, the electronic device may deactivate a previously activated area.

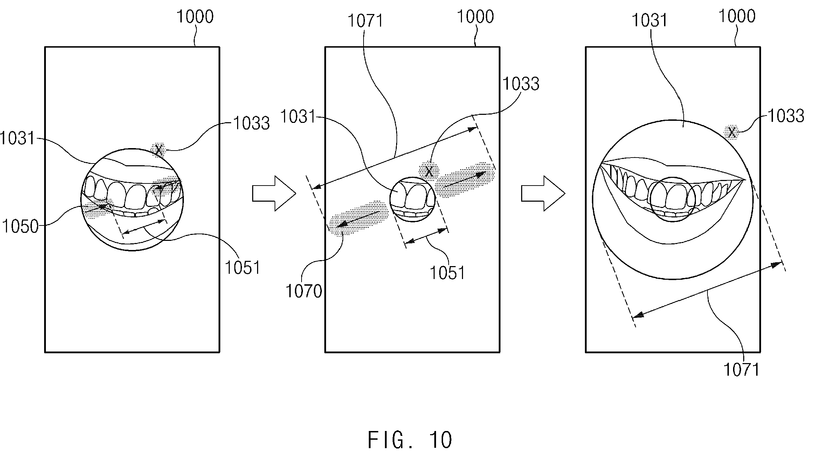

FIG. 10 is a view illustrating a screen control relating to a screen area enlargement/reduction in a state that a function screen of a designated application is outputted according to various embodiments of the present disclosure.

Referring to FIG. 10, an electronic device (for example, the electronic device 101 of FIG. 1) may receive a user input on the function screen in a state that a function screen of a designated application is outputted to a screen 1000 of a display (for example, the display 160 of FIG. 1). The electronic device may analyze the user input on the function screen, and determine whether the user input is an input relating to an enlargement or reduction of a screen area 1031 based on the analyzed result. For example, when a user input is a pinch-zoom-in input 1050 (for example, an input for moving fingers in respectively different opposite directions after touching a predetermined point of the screen 1000 by two fingers) or a pinch-zoom-out input 1070 (for example, an input for moving fingers to face each other after touching a predetermined point of the screen 1000 by two fingers), the electronic device may determine it as a gesture input set to enlarge or reduce the screen area 1031.

According to various embodiments of the present disclosure, when the user input is a gesture input set to enlarge or reduce the screen area 1031, the electronic device may analyze the size (for example, the size of an inputted area) of the user input. For example, the electronic device may calculate a distance 1051 between points (for example, points at which two fingers' contacts are terminated on the screen 1000) at which the pinch-zoom-in input 1050 is terminated and a distance 1071 between points at which the pinch-zoom-output input 1070 is terminated. Additionally, the electronic device may calculate an enlargement or reduction ratio of the screen area 1031 by using the distance.

According to various embodiments of the present disclosure, the electronic device may reduce the screen area 1031 based on the distance 1051 between points at which the pinch-zoom-in input 1050 is terminated. In this case, the electronic device may deactivate an area other than the reduced area. According to various embodiments of the present disclosure, when the screen area 1031 is reduced, the electronic device may not output a previously outputted area by the reduced ratio based on the center point of the function screen. According to an embodiment of the present disclosure, the electronic device may proportionally reduce and process the function screen at the reduced ratio and output it.

According to various embodiments of the present disclosure, the electronic device may enlarge the screen area 1031 based on the distance 1071 between points at which the pinch-zoom-out input 1070 is terminated. For example, the electronic device may additionally activate an area by the enlarged ratio based on the center point of the function screen. Additionally, the electronic device may proportionally enlarge and process the function screen to correspond to the enlarged screen area 1031. According to an embodiment of the present disclosure, the electronic device may collect and output a capture image of a camera to correspond to the enlarged screen area 1031. According to various embodiments of the present disclosure, when the screen area 1031 is enlarged or reduced, the electronic device may move and output the camera stop button 1033 outputted to an adjacent area in correspondence thereto.

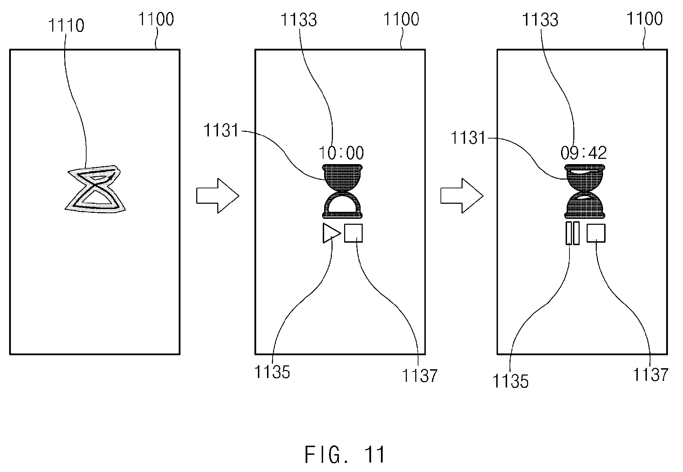

FIG. 11 is a view illustrating a screen control relating to a function screen output of a timer application according to various embodiments of the present disclosure.

Referring to FIG. 11, an electronic device (for example, the electronic device 101 of FIG. 1) may receive a designated user input 1110 in a state that the output of a screen 1100 of a display (for example, the display 160 of FIG. 1) is terminated. As shown in the drawing, when an hourglass-shaped user input 1110 is received, the electronic device may output a function screen of a timer application. For example, the electronic device may activate a screen area to correspond to the location and size of the user input 1110, and output an image display object 1131, a time display object 1133, a timer start/pause button 1135, or a timer stop button 1137 of a timer application to the activated screen area.

The image display object 1131 may include an hourglass-shaped image, and an animation effect in a form that sands in an hourglass fall from top to bottom in correspondence to a timer start request. The time display object 1133 may perform a function for displaying the remaining time in a setting time of a timer. For example, the time display object 1133 may display the remaining time as gradually reducing a time from a set time in correspondence to a timer start request. According to various embodiments of the present disclosure, when an input for selecting the time display object 1133 occurs, the electronic device may output an object such as a pop-up to induce setting a time of a timer.

The timer start/pause button 1135 may perform a function for starting and pausing a timer. For example, when an input for selecting the timer start/pause button 1135 occurs, the electronic device may deliver a timer start request or a timer pause request to a corresponding module. Additionally, the electronic device may change and output an image (or icon) of the timer start/pause button 1135 in correspondence to the selection of the timer start/pause button 1135. For example, the electronic device may alternately output (for example, toggle-process) an image corresponding to a timer start and an image corresponding to a timer pause in correspondence to the input. The time stop button 1137 may perform the stop function of a timer. For example, when an input for selecting the timer stop button 1137 occurs, the electronic device may deliver a timer stop request to a corresponding module. Additionally, the electronic device may initialize and output a timer setting time or terminate the output of a function screen of a timer application, in correspondence to a timer stop request.

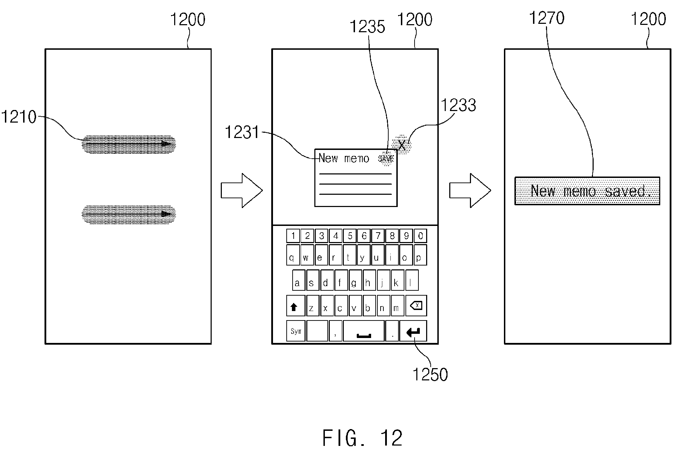

FIG. 12 is a view illustrating a screen control relating to a memo creation screen output of a memo application according to various embodiments of the present disclosure.

Referring to FIG. 12, an electronic device (for example, the electronic device 101 of FIG. 1) may receive a designated user input 1210 in a state that the output of a screen 1200 of a display (for example, the display 160 of FIG. 1) is terminated. As shown in the drawing, when a double tap horizon move input 1210 (for example, an input for moving in a horizontal direction without releasing fingers from the screen 1200 after touching a predetermined point of the screen 1200 by two fingers) is received, the electronic device may output a memo creation screen of a memo application. For example, the electronic device may activate a screen area to correspond to the position and size of the user input 1210, and output a memo creation input field 1231 of a memo application to the activated screen area. According to various embodiments of the present disclosure, the electronic device may output the memo creation input field 1231 and output a soft input panel 1250 to a predetermined area (for example, a lower end area) of the screen 1200.

The memo creation input field 1231 may perform a function for outputting a text, an image, an icon, or symbol inputted through the soft input panel 1250 or a physical input panel (not shown) included at the electronic device. According to various embodiments of the present disclosure, the memo creation input field 1231 may include an additional function object such as a save button 1235 in a predetermined area (for example, a right upper end area). In relation to this, the save button 1235 may perform a function for saving an inputted memory content. For example, when an input for selecting the save button 1235 occurs, the electronic device may save an inputted memo content in a memory (for example, the memory 130 of FIG. 1), and output a notification object 1270 for providing a notification that the inputted memo content is saved. Additionally, the electronic device may terminate the output of the memory creation screen before outputting the notification object 1270.

According to various embodiments of the present disclosure, the electronic device may output a memo stop button 1233 to a predetermined area of the memo creation input field 1231 or an area adjacent to the memo creation input field 1231. The memo stop button 1233 may perform a function for terminating a memo application. For example, when an input for selecting the memo stop button 1233 occurs, the electronic device may deliver a memo stop request to a memo application, save a memo content in creation in a memory, and terminate the output of the memory creation screen.

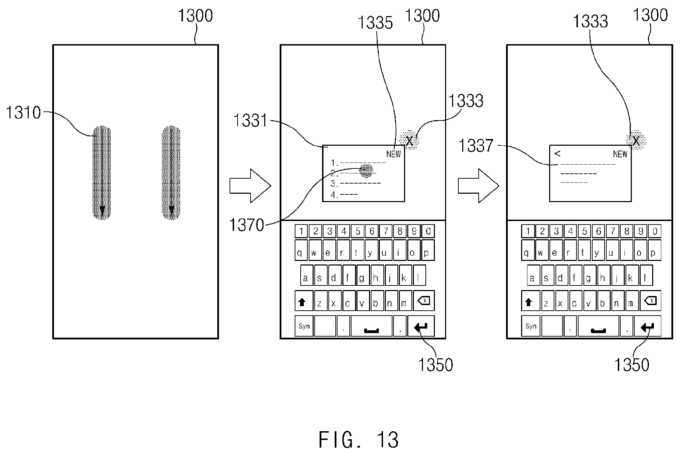

FIG. 13 is a view illustrating a screen control relating to a memo list screen output of a memo application according to various embodiments of the present disclosure.

Referring to FIG. 13, an electronic device (for example, the electronic device 101 of FIG. 1) may receive a designated user input 1310 in a state that the output of a screen 1300 of a display (for example, the display 160 of FIG. 1) is terminated. As shown in the drawing, when a double tap vertical move input 1310 (for example, an input for moving in a vertical direction without releasing fingers from the screen 1300 after touching a predetermined point of the screen 1300 by two fingers) is received, the electronic device may output a memo list screen of a memo application. For example, the electronic device may activate a screen area to correspond to the position and size of the user input 1310, and output a memo list 1331 of a memo application to the activated screen area. According to various embodiments of the present disclosure, the electronic device may output the memo list 1331 and output a soft input panel 1350 to a predetermined area (for example, a lower end area) of the screen 1300.

The memo list 1331 may perform a function for outputting memo items saved in a memory (for example, the memory 130 of FIG. 1). According to various embodiments of the present disclosure, the memo list 1331 may include an additional function object such as a new memo creation button 1335 in a predetermined area (for example, a right upper end area). In relation to this, the new memo creation button 1335 may perform a function for outputting a memo creation input field (for example, the memo creation input field 1231 of FIG. 12) to create a new memo. According to various embodiments of the present disclosure, when an input 1370 for selecting a designated memo item included in the memo list 1331 occurs, the electronic device may output the selected memo item. For example, the electronic device may terminate the output of the memo list 1331 in correspondence to the input 1370 for selecting a designated memo item, and output a text field 1337 for outputting a memo content of the selected memo item. According to an embodiment of the present disclosure, the text field 1337 may be outputted with the same or similar position and size to the memo list 1331.

According to various embodiments of the present disclosure, the electronic device may output a memo stop button 1333 to a predetermined area of the memo list 1331 or an area adjacent to the memo list 1331. The memo stop button 1333 may perform the same or a similar function to the memo stop button 1233 of FIG. 12. Additionally, the memo stop button 1333 may be outputted to a predetermined area of the text field 1337 or an area adjacent to the text field 1337.

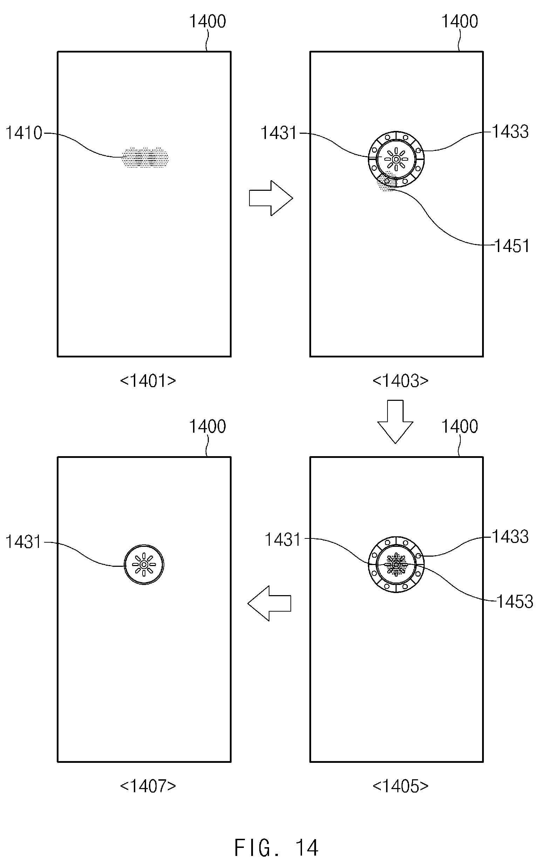

FIG. 14 is a view illustrating a screen control relating to a function screen output of a flash application according to various embodiments of the present disclosure.

Referring to FIG. 14, an electronic device (for example, the electronic device 101 of FIG. 1), as shown in a state 1401, may receive a designated user input 1410 in a state that the output of a screen 1400 of a display (for example, the display 160 of FIG. 1) is terminated. As shown in the drawing, when a triple tap input 1410 is received, the electronic device may output a function screen of a flash application. For example, the electronic device, as shown in a state 1403, may activate a screen area to correspond to the position and size of the user input 1410, and output a main light 1431 or a sub light 1433 of a flash application to the activated screen area.

The main light 1431 may perform a function for outputting a designated color to correspond to a set brightness. The sub light 1433 may perform a function for providing a blink effect. For example, the sub light 1433 may turn on/off the output of a set color at a designated time interval. According to an embodiment of the present disclosure, the electronic device may dispose at least one sub light 1433 to be adjacent to the main light 1431, and when a plurality of sub lights 1433 are disposed, a blink time of each sub light 1433 may be set differently.

According to various embodiments of the present disclosure, when an input 1451 for selecting the sub light 1433 occurs in a state 1403, the electronic device may output an object for inducing setting a blink time of the sub light 1433. Alternatively, when an input 1451 for selecting the sub light 1433 occurs, as shown in a state 1405, the electronic device may terminate the blink function of the sub light 1433. According to various embodiments of the present disclosure, when an input 1453 for selecting the main light 1431 occurs, the electronic device, as shown in a state 1407, may terminate a designated color output of the main light 1431. Additionally, the electronic device may terminate the output of the sub light 1433 in addition to the termination of the designated color output of the main light 1431. According to an embodiment of the present disclosure, when an input 1453 for selecting the main light 1431 occurs, the electronic device may terminate the flash application and terminate the output of the function screen.

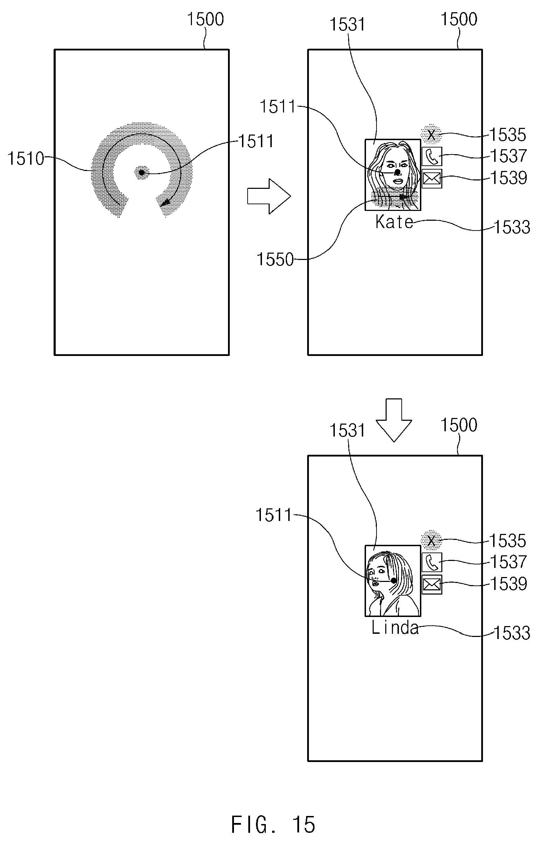

FIG. 15 is a view illustrating a screen control relating to a function screen output of a contact application according to various embodiments of the present disclosure.

Referring to FIG. 15, an electronic device (for example, the electronic device 101 of FIG. 1) may receive a designated user input 1210 in a state that the output of a screen 1500 of a display (for example, the display 160 of FIG. 1) is terminated. As shown in the drawing, when a touch and circle move input 1510 (for example, an input for moving in circle by touching another point of the screen 1500 by another finger in a state of touching one point 1511 of the screen 1500 by one finger) is received, the electronic device may output a function screen of a contact application. For example, the electronic device may activate a screen area to correspond to the location and size of the user input 1510, and output a contact target image display object 1531, a contact target name display object 1533, a contact screen stop button 1535, a call button 1537, or a message send button 1539 of a contact application, to the activated screen area.

The contact target image display object 1531 may include a picture image of a selected contact target. According to an embodiment of the present disclosure, when a picture image of a selected contact target is not set, the electronic device may specify and output a basic image (for example, an image of a person form). The contact target name display object 1533 may include the name of a selected contact target. According to various embodiments of the present disclosure, the contact target name display object 1533 may further the phone number of the contact target.

The contact screen stop button 1535 may perform a function for terminating a function screen of a contact application outputted to the activated screen area. For example, when an input for selecting the contact screen stop button 1535 occurs, the electronic device may terminate the output of the function screen. The call button 1537 may deliver a related request to a corresponding module to make a phone call to a selected contact target. For example, when an input for selecting the call button 1537 occurs, the electronic device may be connected to the contact target through a phone network (for example, the network 162 of FIG. 1). The message send button 1539 may deliver a related request to a corresponding module to send a message to a selected contact target. For example, when an input for selecting the message send button 1539 occurs, the electronic device may output a message creation screen.

According to various embodiments of the present disclosure, when a designated user input 1550 (for example, a flick input (for example, an input for touching one point of the function screen and then, releasing the finger from the function screen while moving in a designated direction within a predetermined time) on a function screen of a contact application occurs, the electronic device may change a contact target to output a function screen. The drawing shown represents a state that the electronic device changes a first contact person (for example, a contact person with the name "Kate") into a second contact person (for example, a contact person with the name "Linda") in correspondence to the user input 1550. Accordingly, the electronic device may change and output the contact target image display object 1531 and the contact target name display object 1533.

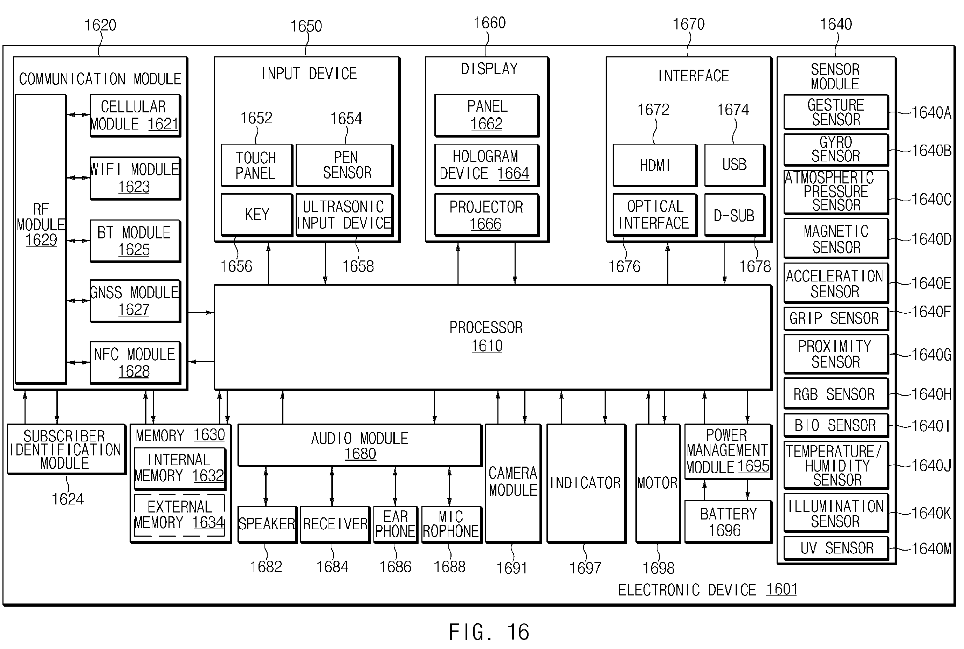

FIG. 16 is a block diagram of an electronic device according to various embodiments of the present disclosure.

Referring to FIG. 16, an electronic device 1601, for example, may configure all or part of the above-mentioned electronic device 101 shown in FIG. 1. The electronic device 1601 may include at least one processor (for example, an AP 1610), a communication module 1620, a subscriber identification module (SIM) 1624, a memory 1630, a sensor module 1640, an input device 1650, a display 1660, an interface 1670, an audio module 1680, a camera module 1691, a power management module 1695, a battery 1696, an indicator 1697, and a motor 1698.

The processor 1610 may control a plurality of hardware or software components connected thereto and also may perform various data processing and operations by executing an OS or an application program. The processor 1610 may be implemented with a system on chip (SoC), for example. According to an embodiment of the present disclosure, the processor 1610 may further include a graphic processing unit (GPU) (not shown) and/or an image signal processor (ISP). The processor 1610 may include at least part (for example, the cellular module 1621) of components shown in FIG. 16. The processor 1610 may load commands or data received from at least one of other components (for example, nonvolatile memory) and process them and may store various data in a nonvolatile memory.

The communication module 1620 may have the same or similar configuration to the communication interface 170 of FIG. 1. The communication module 1620 may include a cellular module 1621, a Wi-Fi module 1623, a BT module 1625, a GNSS module 1627 (for example, a GPS module, a Glonass module, a Beidou module, or a Galileo module), an NFC module 1628, and a radio frequency (RF) module 1629.

The cellular module 1621, for example, may provide voice call, video call, text service, or internet service through communication network. According to an embodiment of the present disclosure, the cellular module 1621 may perform a distinction and authentication operation on the electronic device 1601 in a communication network by using the SIM 1624 (for example, a SIM card). According to an embodiment of the present disclosure, the cellular module 1621 may perform at least part of a function that the AP 1610 provides. According to an embodiment of the present disclosure, the cellular module 1621 may include a CP.

Each of the Wi-Fi module 1623, the BT module 1625, the GNSS module 1627, and the NFC module 1628 may include a processor for processing data transmitted/received through a corresponding module. According to an embodiment of the present disclosure, at least part (for example, at least one) of the cellular module 1621, the Wi-Fi module 1623, the BT module 1625, the GNSS module 1627, and the NFC module 1628 may be included in one integrated chip (IC) or IC package.

The RF module 1629, for example, may transmit/receive communication signals (for example, RF signals). The RF module 1629, for example, may include a transceiver, a power amp module (PAM), a frequency filter, a low noise amplifier (LNA), or an antenna. According to another embodiment of the present disclosure, at least one of the cellular module 1621, the Wi-Fi module 1623, the BT module 1625, the GNSS module 1627, and the NFC module 1628 may transmit/receive RF signals through a separate RF module.

The SIM 1624, for example, may include a card including a SIM and/or an embedded SIM and also may include unique identification information (for example, an integrated circuit card identifier (ICCID)) or subscriber information (for example, an international mobile subscriber identity (IMSI)).

The memory 1630 (for example, the memory 130) may include an internal memory 1632 or an external memory 1634. The internal memory 1632 may include at least one of a volatile memory (for example, dynamic random access memory (DRAM), static RAM (SRAM), synchronous dynamic RAM (SDRAM)) and a non-volatile memory (for example, one time programmable read only memory (OTPROM), programmable ROM (PROM), erasable and programmable ROM (EPROM), electrically erasable and programmable ROM (EEPROM), mask ROM, flash ROM, flash memory (for example, NAND flash or NOR flash), hard drive, and solid state drive (SSD)).

The external memory 1634 may further include flash drive, for example, compact flash (CF), secure digital (SD), micro-SD, mini-SD, extreme digital (xD), multi-media card (MMC) or a memory stick. The external memory 1634 may be functionally and/or physically connected to the electronic device 1601 through various interfaces.

The sensor module 1640 measures physical quantities or detects an operating state of the electronic device 1601, thereby converting the measured or detected information into electrical signals. The sensor module 1640 may include at least one of a gesture sensor 1640A, a gyro sensor 1640B, a barometric pressure sensor 1640C, a magnetic sensor 1640D, an acceleration sensor 1640E, a grip sensor 1640F, a proximity sensor 1640G, a color sensor 1640H (for example, a red, green, blue (RGB) sensor), a biometric sensor 1640I, a temperature/humidity sensor 1640J, an illumination sensor 1640K, and an ultra violet (UV) sensor 1640M. Additionally or alternatively, the sensor module 1640 may include an E-nose sensor, an electromyography (EMG) sensor, an electroencephalogram (EEG) sensor, an electrocardiogram (ECG) sensor , an infrared (IR) sensor, an iris sensor, and/or a fingerprint sensor. The sensor module 1640 may further include a control circuit for controlling at least one sensor therein. According to an embodiment of the present disclosure, the electronic device 1601 may further include a processor configured to control the sensor module 1640 as part of or separately from the AP 1610 and thus may control the sensor module 1640 while the AP 1610 is in a sleep state.

The input device 1650 may include a touch panel 1652, a (digital) pen sensor 1654, a key 1656, or an ultrasonic input device 1658. The touch panel 1652 may use at least one of capacitive, resistive, infrared, or ultrasonic methods, for example. Additionally, the touch panel 1652 may further include a control circuit. The touch panel 1652 may further include a tactile layer to provide tactile response to a user.

The (digital) pen sensor 1654, for example, may include a sheet for recognition as part of a touch panel or a separate sheet for recognition. The key 1656 may include a physical button, an optical key, or a keypad, for example. The ultrasonic input device 1658 may detect ultrasonic waves generated from an input tool through a microphone (for example, the microphone 1688) in order to check data corresponding to the detected ultrasonic waves.

The display 1660 (for example, the display 160) may include a panel 1662, a hologram device 1664, or a projector 1666. The panel 1662 may have the same or similar configuration to the display 160 of FIG. 1. The panel 1662 may be implemented to be flexible, transparent, or wearable, for example. The panel 1662 and the touch panel 1652 may be configured with one module. The hologram 1664 may show three-dimensional images in the air by using the interference of light. The projector 1666 may display an image by projecting light on a screen. The screen, for example, may be placed inside or outside the electronic device 1601. According to an embodiment of the present disclosure, the display 1660 may further include a control circuit for controlling the panel 1662, the hologram device 1664, or the projector 1666.

The interface 1670 may include an HDMI 1672, a USB 1674, an optical interface 1676, or a D-subminiature (sub) 1678, for example. The interface 1670, for example, may be included in the communication interface 170 shown in FIG. 1. Additionally or alternatively, the interface 1670 may include a mobile high-definition link (MHL) interface, an sSD card/(MMC interface, or an infrared data association (IrDA) standard interface.

The audio module 1680 may convert sound into electrical signals and convert electrical signals into sounds. At least some components of the audio module 1680, for example, may be included in the input/output interface 150 shown in FIG. 1. The audio module 1680 may process sound information inputted/outputted through a speaker 1682, a receiver 1684, an earphone 1686, or a microphone 1688.

The camera module 1691, as a device for capturing a still image and a video, may include at least one image sensor (for example, a front sensor or a rear sensor), a lens, an ISP, or a flash (for example, an LED or a xenon lamp).

The power management module 1695 may manage the power of the electronic device 1601. According to an embodiment of the present disclosure, the power management module 1695 may include a power management IC (PMIC), a charger IC, or a battery or fuel gauge, for example. The PMIC may have a wired and/or wireless charging method. As the wireless charging method, for example, there is a magnetic resonance method, a magnetic induction method, or an electromagnetic method. An additional circuit for wireless charging, for example, a circuit such as a coil loop, a resonant circuit, or a rectifier circuit, may be added. The battery gauge may measure the remaining amount of the battery 1696, or a voltage, current, or temperature thereof during charging. The battery 1696, for example, may include a rechargeable battery and/or a solar battery.

The indicator 1697 may display a specific state of the electronic device 1601 or part thereof (for example, the processor 1610), for example, a booting state, a message state, or a charging state. The motor 1698 may convert electrical signals into mechanical vibration and may generate vibration or haptic effect. Although not shown in the drawings, the electronic device 1601 may include a processing device (for example, a GPU) for mobile TV support. A processing device for mobile TV support may process media data according to the standards such as digital multimedia broadcasting (DMB), digital video broadcasting (DVB), or mediaFLO™.

Each of the above-mentioned components of the electronic device according to various embodiments of the present disclosure may be configured with at least one component and the name of a corresponding component may vary according to the kind of an electronic device. According to various embodiments of the present disclosure, an electronic device according to various embodiments of the present disclosure may include at least one of the above-mentioned components, may not include some of the above-mentioned components, or may further include another component. Additionally, some of components in an electronic device according to various embodiments of the present disclosure are configured as one entity, so that functions of previous corresponding components are performed identically.

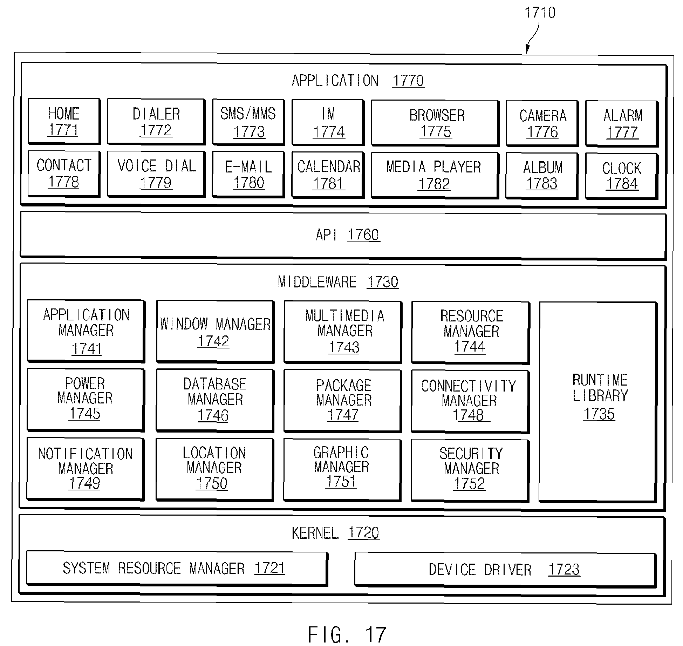

FIG. 17 is a block diagram illustrating a program module according to various embodiments of the present disclosure.

Referring to FIG. 17, the program module 1710 (for example, the program 140) may include an OS for controlling a resource relating to an electronic device (for example, the electronic device 101) and/or various applications (for example, the application program 147) running on the OS. The OS, for example, may include android, iOS, windows, symbian, tizen, or bada.

Referring to FIG. 17, the program module 1710 may include a kernel 1720, a middleware 1730, an API 1760, and/or an application program (or an application) 1770. At least part of the program module 1710 may be preloaded on an electronic device or may be downloaded from a server (for example, the electronic devices 102 and 104 and the server 106).

The kernel 1720 (for example, the kernel 141), for example, may include a system resource manager 1721 and/or a device driver 1723. The system resource manager 1721 may perform the control, allocation, or retrieval of a system resource. According to an embodiment of the disclosure, the system resource manager 1721 may include a process management unit, a memory management unit, or a file system management unit. The device driver 1723, for example, a display driver, a camera driver, a BT driver, a sharing memory driver, a USB driver, a keypad driver, a Wi-Fi driver, an audio driver, or an inter-process communication (IPC) driver.

The middleware 1730, for example, may provide a function that the application 1770 requires commonly, or may provide various functions to the application 1770 through the API 1760 in order to allow the application 1770 to efficiently use a limited system resource inside the electronic device. According to an embodiment, the middleware 1730 (for example, the middleware 143) may include at least one of a runtime library 1735, an application manager 1741, a window manager 1742, a multimedia manager 1743, a resource manager 1744, a power manager 1745, a database manager 1746, a package manager 1747, a connectivity manager 1748, a notification manager 1749, a location manager 1750, a graphic manager 1751, and a security manager 1752.

The runtime library 1735, for example, may include a library module that a complier uses to add a new function through a programming language while the application 1770 is running. The runtime library 1735 may perform a function on input/output management, memory management, or an arithmetic function.

The application manager 1741, for example, may mange the life cycle of at least one application among the applications 1770. The window manager 1742 may manage a graphical user interface (GUI) resource used in a screen. The multimedia manager 1743 may recognize a format for playing various media files and may encode or decode a media file by using the codec corresponding to a corresponding format. The resource manager 1744 may manage a resource such as a source code, a memory, or a storage space of at least any one of the applications 1770.

The power manager 1745, for example, may operate together with a basic input/output system (BIOS) to manage the battery or power and may provide power information necessary for an operation of the electronic device. The database manager 1746 may create, search, or modify a database used in at least one application among the applications 1770. The package manager 1747 may manage the installation or update of an application distributed in a package file format.

The connectivity manger 1748 may manage a wireless connection such as Wi-Fi or BT. The notification manager 1749 may display or notify an event such as arrival messages, appointments, and proximity alerts to a user in a manner of not interrupting the user. The location manager 1750 may manage location information on an electronic device. The graphic manager 1751 may manage a graphic effect to be provided to a user or a user interface relating thereto. The security manager 1752 may provide various security functions necessary for system security or user authentication. According to an embodiment, when an electronic device (for example, the electronic device 101) includes a phone function, the middleware 1730 may further include a telephony manager for managing a voice or video call function of the electronic device.

The middleware 1730 may include a middleware module for forming a combination of various functions of the above-mentioned components. The middleware 1730 may provide a module specialized for each type of OS to provide differentiated functions. Additionally, the middleware 1730 may delete part of existing components or add new components dynamically.

The API 1760 (for example, the API 145), for example, as a set of API programming functions, may be provided as another configuration according to OS. For example, in the case of android or iOS, one API set may be provided for each platform and in the case Tizen, at least two API sets may be provided for each platform.

The application 1770 (for example, the application program 147) may include at least one application for providing functions such as a home 1771, a dialer 1772, a short message service (SMS)/multimedia message service (MMS) 1773, an instant message (IM) 1774, a browser 1775, a camera 1776, an alarm 1777, a contact 1778, a voice dial 1779, an e-mail 1780, a calendar 1781, a media player 1782, an album 1783, a clock 1784, health care (for example, measure an exercise amount or blood sugar), or environmental information provision (for example, provide air pressure, humidity, or temperature information).

According to an embodiment, the application 1770 may include an application (hereinafter referred to as "information exchange application") for supporting information exchange between the electronic device (for example, the electronic device 101) and an external electronic device (for example, the electronic device 102 or 104). The information exchange application, for example, may include a notification relay application for relaying specific information to the external device or a device management application for managing the external electronic device.

For example, the notification relay application may have a function for relaying to an external electronic device (for example, electronic devices 102 and 104) notification information occurring from another application (for example, an SMS/MMS application, an e-mail application, a health care application, or an environmental information application) of the electronic device. Additionally, the notification relay application may receive notification information from an external electronic device and may then provide the received notification information to a user.

The device management application, for example, may manage (for example, install, delete, or update) at least one function (turn-on/turn off of the external electronic device itself (or some components) or the brightness (or resolution) adjustment of a display) of an external electronic device (for example, the electronic devices 102 and 104) communicating with the electronic device, an application operating in the external electronic device, or a service (for example, call service or message service) provided from the external device.

According to an embodiment of the disclosure, the application 1770 may include a designated application (for example, a health care application of a mobile medical device) according to the property of an external electronic device (for example, the electronic devices 102 and 104). According to an embodiment, the application 1770 may include an application received from an external electronic device (for example, the server 106 or the electronic device 102 or 104). According to an embodiment of the disclosure, the application 1770 may include a preloaded application or a third party application downloadable from a server. The names of components in the program module 1710 according to the shown embodiment may vary depending on the type of OS.

According to various embodiments of the present disclosure, at least part of the program module 1710 may be implemented with software, firmware, hardware, or a combination thereof. At least part of the programming module 1710, for example, may be implemented (for example, executed) by a processor (for example, the processor 1610). At least part of the programming module 1710 may include a module, a program, a routine, sets of instructions, or a process to perform at least one function, for example.

According to various embodiments of the present disclosure, by activating a screen area of a display corresponding to the position or size of a gesture inputted in a state that a screen output is terminated and displaying at least a partial function screen of an application that is differently designated according to the type or form of the gesture, on the activated screen area, it is possible to access and control a desired function fast.

Additionally, according to various embodiments of the present disclosure, by performing the movement or enlargement/reduction of the screen area according to a gesture inputted in a state that at least a partial function screen of a designated application is outputted, it may be controlled to output the function screen to a desired screen area.

The term "module" used in various embodiments of the present disclosure, for example, may mean a unit including a combination of at least one of hardware, software, and firmware. The term "module" and the term "unit", "logic", "logical block", "component", or "circuit" may be interchangeably used. A "module" may be a minimum unit or part of an integrally configured component. A "module" may be a minimum unit performing at least one function or part thereof. A "module" may be implemented mechanically or electronically. For example, "module" according to various embodiments of the present disclosure may include at least one of an application-specific integrated circuit (ASIC) chip performing certain operations, field-programmable gate arrays (FPGAs), or a programmable-logic device, all of which are known or to be developed in the future.

According to various embodiments of the present disclosure, at least part of a device (for example, modules or functions thereof) or a method (for example, operations) according to this disclosure, for example, as in a form of a programming module, may be implemented using an instruction stored in computer-readable storage media. When at least one processor (for example, the processor 120) executes an instruction, it may perform a function corresponding to the instruction. The non-transitory computer-readable storage media may include the memory 130, for example.

The non-transitory computer-readable storage media may include hard disks, floppy disks, magnetic media (for example, magnetic tape), optical media (for example, compact disc ROM (CD-ROM), and digital versatile disc (DVD)), magnetooptical media (for example, floptical disk), and hardware devices (for example, ROM, RAM, or flash memory). Additionally, a program instruction may include high-level language code executable by a computer using an interpreter in addition to machine code created by a complier. The hardware device may be configured to operate as at least one software module to perform an operation of various embodiments of the present disclosure and vice versa.

A module or a programming module according to various embodiments of the present disclosure may include at least one of the above-mentioned components, may not include some of the above-mentioned components, or may further include another component. Operations performed by a module, a programming module, or other components according to various embodiments of the present disclosure may be executed through a sequential, parallel, repetitive or heuristic method. Additionally, some operations may be executed in a different order or may be omitted. Or, other operations may be added. Moreover, the embodiments disclosed in this specification are suggested for the description and understanding of technical content but do not limit the range of the present disclosure. Accordingly, the range of the present disclosure should be interpreted as including all modifications or various other embodiments based on the technical idea of the present disclosure.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. An electronic device comprising:
a touch screen display configured to receive a user input; and
a processor configured to:
analyze a first user input received in a state that a screen output of the display is terminated,
activate a partial screen area of the display based on the analyzed result, and
output an execution screen of a designated application to the partial screen area based on the analyzed result.

2. The electronic device of claim 1, wherein the partial screen area is an area with a same or similar size to a size of an area where the first user input is inputted, at a screen position of the display corresponding to a position of the first user input.

3. The electronic device of claim 1, wherein at least one function of the designated application is configured to be selected based on at least one of an input method of the first user input, the number of touch objects of the first user input, and a form of the first user input.

4. The electronic device of claim 1, wherein the processor is further configured to enlarge, reduce or crop the execution screen such that a size of the execution screen corresponds to a size of the partial screen area.

5. The electronic device of claim 1, wherein the processor is further configured to move, enlarge, or reduce the partial screen area based on a second user input received in a state that the execution screen is outputted.

6. The electronic device of claim 5, wherein, when the second user input is an input relating to a movement of the partial screen area, the processor is further configured to:
deactivate the partial screen area and activate another partial screen area of the display based on analyzed result of the second user input; and
move the execution screen to the another partial screen area.

7. The electronic device of claim 5, wherein, when the second user input is an input relating to an enlargement of the partial screen area, the processor is further configured to:
activate an additional screen area of the display by the enlarged ratio based on a center point of the execution screen; and
proportionally enlarge the execution screen such that a size of the execution screen corresponds to a size of an enlarged screen area including the partial screen area and the additional screen area, or output another execution screen that is newly collected from the designated application, such that a size of the another execution screen corresponds to a size of the enlarged screen area, to the enlarged screen area.

8. The electronic device of claim 5, wherein, when the second user input is an input relating to a reduction of the partial screen area, the processor is further configured to:
deactivate a part of the partial screen area by the reduced ratio based on a center point of the execution screen; and
terminate an output of a part of the execution screen corresponding to the part of the partial screen area, or proportionally reduce the execution screen such that a size of the execution screen corresponds to a size of the other part of the partial screen area.

9. The electronic device of claim 1, wherein, based on a second user input received in a state that the execution screen is outputted, the processor is further configured to add at least one other object related to at least one other function of the designated application to the execution screen, to remove at least one object from the execution screen, or to replace at least one of the at least one object with the at least one other object.

10. The electronic device of claim 1, wherein the processor is further configured to perform at least one function of the designated application based on a second user input received in a state that the execution screen is outputted.

11. A screen controlling method of an electronic device, the method comprising:
receiving a first user input in a state that a screen output of a display is terminated;
analyzing the first user input;
selecting a partial screen area of the display based on the analyzed result;
activating the partial screen area; and
outputting an execution screen of a designated application to the partial screen area based on the analyzed result.

12. The method of claim 11, wherein the selecting of the partial screen area comprises selecting an area which has a same or similar size to a size of an area where the first user input is inputted, at a screen position of the display corresponding to a position of the first user input as the partial screen area.

13. The method of claim 11, wherein at least one function of the designated application is configured to be selected based on at least one of an input method of the first user input, the number of touch objects of the first user input, and a form of the first user input.

14. The method of claim 11, wherein the outputting of the execution screen further comprises enlarging, reducing or cropping the execution screen such that a size of the execution screen corresponds to a size of the partial screen area.

15. The method of claim 11, further comprising moving, enlarging, or reducing the partial screen area based on a second user input received in a state that the execution screen is outputted.
